# DEMANDE DE BREVET EUROPEEN

(11) **EP 4 814 650 A1**
(43) Date de publication de la demande: **30.09.2026**
(21) Numéro de dépôt: 26151705.6
(22) Date de dépôt: 14.01.2026
(51) Int. Cl.: G06F 1/16, G06V 40/13, G06F 21/32

(54) **SYSTÈME DE FIXATION AMOVIBLE D'UN MODULE BIOMÉTRIQUE SUR UN TERMINAL BIOMÉTRIQUE MODULAIRE**

(30) Priorité: 28.03.2025 FR 2503192
(71) Demandeur: Idemia Public Security France, 92400 Courbevoie (FR)
(72) Inventeur: TEYROL, Jean-Michel, 92400 Courbevoie (FR); BARTHE, Michael, 92400 Courbevoie (FR); DUMONT, Denis, 92400 COURBEVOIE (FR)
(74) Mandataire: IPS

(57) **Abrégé**

Système de fixation amovible d'un module biométrique sur un terminal modulaire d'identification biométrique, le système comprend :
- Un logement aménagé sur une face arrière du boitier du terminal modulaire, ledit logement comprend une ouverture munie d'un bord saillant latéral ;
- Une patte de maintien, mécaniquement solidaire du module biométrique, ladite patte de maintien, lorsqu'elle est insérée dans le logement du boitier, maintient un contact mécanique surfacique avec au moins une portion de la paroi interne dudit logement et enveloppe le bord saillant latéral de l'ouverture.

## Description

### Domaine technique

La présente invention concerne un système de fixation amovible d'un module biométrique sur un terminal biométrique modulaire.

### Arrière-plan technique

Il est courant de recourir à des protocoles d'identification et/ou d'authentification des individus fondés sur la comparaison de certaines de leurs caractéristiques biométriques afin de les autoriser à accéder à une ou plusieurs zones d'accès restreint. Ces protocoles sont généralement mis en en œuvre par des systèmes de contrôle d'accès disposés à l'entrée de ces zones. Ces systèmes comprennent des terminaux d'identification biométrique reliés à des dispositifs de portes physiques dont l'ouverture ou la fermeture sont conditionnées par la réussite ou l'échec d'opérations d'identification ou d'authentification réalisées par les terminaux d'identification biométrique sur les individus qui s'y présentent.

Les terminaux d'identification biométrique peuvent être munis d'un ou plusieurs dispositifs d'acquisition d'une ou plusieurs caractéristiques biométriques selon le type de protocole d'identification et/ou d'authentification qu'ils mettent en œuvre. Les caractéristiques biométriques sont généralement choisies parmi les dermatoglyphes d'un ou plusieurs doigts, les dermatoglyphes palmaires, un ou plusieurs iris, ou un visage, ou leur combinaison. Un terminal d'identification biométrique permettant plusieurs modes d'identification, notamment, à partir de différentes caractéristiques biométriques sont généralement désignés sous l'expression « terminaux multimodaux ».

Il existe des terminaux multimodaux d'identification biométrique dits « intégrés ». Ces terminaux peuvent comprendre un ou plusieurs dispositifs d'acquisition d'une ou plusieurs caractéristiques biométriques, mais ne peuvent pas être modifiés. Pour procéder à l'ajout, au retrait ou au remplacement d'un dispositif d'acquisition, l'ensemble du terminal doit être remplacé.

WO 2014/160448 A1 [SOLOINSIGHT INC [US]] 02.10.2014 décrit un terminal multimodal intégré comprenant un module d'identification par reconnaissance d'iris et un module d'identification par reconnaissance faciale.

DE 202022104750 U1 [PRADOTEC SALES & SERVICES SDN BHD [MY]] 30.06.2022 décrit un terminal multimodal intégré comprenant un module d'identification par reconnaissance de dactylogrammes, un module d'identification par reconnaissance d'iris et un module d'identification par reconnaissance faciale.

Il existe des terminaux multimodaux d'identification biométrique dits « modulaires ». Ces terminaux sont modifiables et permettent généralement l'ajout, le retrait ou le remplacement d'un ou plusieurs modules biométriques comprenant un ou plusieurs dispositifs d'acquisition d'une ou plusieurs caractéristiques biométriques.

WO 2015/104486 A1 [SYSTEMES ET TECHNOLOGIES IDENTIFICATION STID [FR]] 16.07.2015 décrit un lecteur modulaire de contrôle d'accès par carte comprenant des moyens de fixation provisoire d'un module complémentaire biométrique. Le système de fixation provisoire est composé par un premier rebord faisant saillie de la façade avant du boîtier du lecteur par carte et par un deuxième rebord faisant saillie de la façade arrière du socle dudit boitier, les rebords sont agencés de manière à s'aligner et à former une fente dans laquelle peuvent s'insérer des pattes de maintien d'un module complémentaire biométrique. Les pattes de maintien viennent alors en appuie sur le premier rebord faisant saillie de la façade

### Résumé de l'invention

Afin de préserver des risques de piratage, de détérioration et/ou d'intrusion dans les dispositifs d'acquisition et de traitement de caractéristiques biométriques des terminaux d'identification biométrique, ces derniers se présentent généralement dans des boitiers inviolables, du moins difficilement pénétrable ou démontable. Cette précaution évite l'exposition des composants électroniques sensibles. La communication avec le terminal est alors assurée par une connectique adaptée.

Or, le système de fixation décrit dans WO 2015/104486 A1 [SYSTEMES ET TECHNOLOGIES IDENTIFICATION STID [FR]] 16.07.2015 n'est adapté que pour les lecteurs de carte. Dès lors que le terminal comprend lui-même un dispositif d'acquisition biométrique, l'utilisation de la façade avant du terminal comme support d'appui au module biométrique complémentaire lors de l'assemblage et de la fixation, expose l'intérieur du terminal et donc, potentiellement, ses composants électroniques sensibles. Il est donc un besoin d'un système de fixation adapté à ce type de terminaux.

Un premier aspect de l'invention concerne un système de fixation amovible d'un module biométrique sur un terminal modulaire d'identification biométrique, le système comprend :
- Un logement aménagé sur une face arrière du boitier du terminal modulaire, ledit logement comprend une ouverture munie d'un bord saillant latéral ;
- Une patte de maintien, mécaniquement solidaire du module biométrique, ladite patte de maintien, lorsqu'elle est insérée dans le logement du boitier, maintient un contact mécanique surfacique avec au moins une portion de la paroi interne dudit logement et enveloppe le bord saillant latéral de l'ouverture.

Selon certains modes de réalisation, le logement comprend une deuxième ouverture munie d'un bord saillant latéral, et la patte de maintien, lorsqu'elle est insérée dans le logement, enveloppe le bord saillant latéral de la deuxième ouverture.

Selon certains modes de réalisation, la patte de maintien comprend une première branche qui, lorsqu'elle est insérée dans le logement, maintient un contact mécanique surfacique entre une portion de sa surface externe et au moins une portion de la paroi interne du logement et enveloppe le bord saillant latéral de la première ouverture, et une deuxième branche qui, lorsqu'elle est insérée dans le logement, maintient un contact mécanique surfacique entre une portion de sa surface externe et au moins une portion de la paroi interne du logement et enveloppe le bord saillant latéral de la deuxième ouverture.

Selon certains modes de réalisation, la patte de maintien enveloppe le bord saillant latéral de la première ouverture et/ou le bord saillant latéral de la deuxième ouverture grâce à un coude.

Selon certains modes de réalisation, la patte de maintien est composée d'une matière élastique, de préférence en polymère thermoplastique, et les dimensions de la patte, en particulier l'écartement des deux branches, sont plus grandes que le logement du boitier du terminal, de sorte que, lorsqu'elle est insérée dans le logement, elle exerce une contrainte mécanique de compression sur la paroi interne du logement.

Selon certains modes de réalisation, la patte de maintien est insérée dans le logement du terminal par emboitement.

Selon certains modes de réalisation, la patte de maintien, notamment l'une ou l'autre des deux branches ou les deux, comprend une rigole pour le passage d'un câble de connexion entre le terminal modulaire et le module biométrique.

Selon certains modes de réalisation, le système de fixation amovible comprend en outre un ruban, de préférence en matière plastique ou en carton, encerclant et chevauchant la jonction entre terminal modulaire et le module biométrique.

Selon certains modes de réalisation, le système de fixation amovible comprend, en outre, une plaque de fermeture, de préférence en plastique, ladite plaque de fermeture étant adaptée à être fixée au logement du terminal modulaire de manière à fermer ledit logement et à bloquer la patte de maintien du module biométrique dans ledit logement.

Selon certains modes de réalisation, le système de fixation amovible comprend, en outre, un support de fixation murale, de préférence sous la forme d'une plaque métallique

Un deuxième aspect de l'invention concerne un terminal modulaire un logement adapté pour un système de fixation amovible selon l'un des quelconques modes de réalisation du premier aspect de l'invention.

Selon certains modes de réalisation, le logement est intégré au boitier du terminal modulaire ou est une pièce rapportée sur la face arrière dudit boitier.

Selon certains modes de réalisation, le terminal modulaire comprend un dispositif de reconnaissance faciale.

Un troisième aspect de l'invention concerne un module biométrique comprenant une patte de maintien adaptée pour un système de fixation amovible selon l'un des quelconques modes de réalisation du premier aspect de l'invention.

Selon certains modes de réalisation, la patte de maintien peut être intégrée au boitier du module biométrique, formant une seule pièce avec ledit boitier, ou être une pièce rapportée sur le boitier.

### Brève description des dessins

**Fig. 1** une représentation schématique d'un système d'identification biométrique comprenant un terminal modulaire d'identification biométrique muni d'un module biométrique.
**Fig. 2** est une représentation schématique de la face arrière du terminal biométrique modulaire.
**Fig. 3** est une représentation schématique du détail I de la **Fig. 2****.**
**Fig. 4** est une représentation schématique du module biométrique désolidarisé du terminal biométrique.
**Fig. 5** est une représentation schématique de la face arrière du module biométrique de la **Fig. 4****.**
**Fig. 6** est une représentation schématique en vue de face du système de fixation lorsque le module biométrique est assemblé au terminal biométrique.
**Fig. 7** est une représentation schématique en perspective éclatée du système de fixation lorsque le module biométrique est assemblé au terminal biométrique

### Description détaillée des modes de réalisation

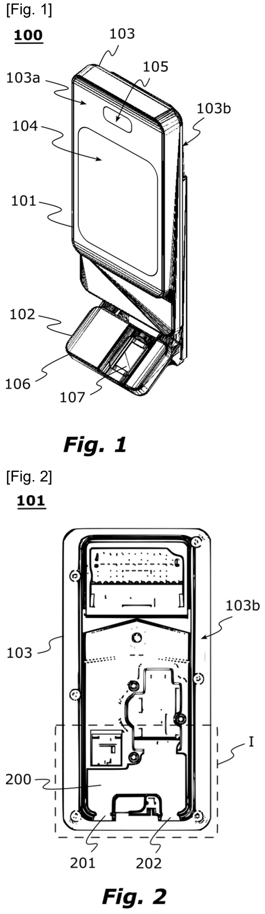

En référence à la **Fig. 1****,** un système **100** d'identification biométrique peut, par exemple, comprendre un terminal **101** modulaire d'identification biométrique muni d'un module biométrique **102.** Le terminal **101** modulaire comprend un boitier **103** comprenant une face principale avant **103a** et une face principale arrière **103b.** Sur la face principale avant **103a** sont agencés un écran **104** d'affichage interactif et un dispositif **105** d'identification par reconnaissance faciale sous la forme d'une caméra.

Le module biométrique **102** est fixé sous le terminal **101** modulaire. Dans cet exemple, le module biométrique **102** comprend un boitier **106** dans lequel est agencé un dispositif **107** d'acquisition de dactylogrammes digitaux. Ce dispositif **107** permet de compléter l'identification par reconnaissance faciale mise en oeuvre par le terminal **101** modulaire par une identification par reconnaissance d'empreintes digitales. Selon d'autres modes de réalisation, le module biométrique **102** peut comprendre un dispositif d'acquisition d'un ou plusieurs dactylogrammes digitaux ou palmaires, et/ou un dispositif d'acquisition d'iris. Lorsqu'il comprend dispositif d'acquisition d'iris, le module **102** biométrique peut être placé au-dessus du terminal **101** biométrique.

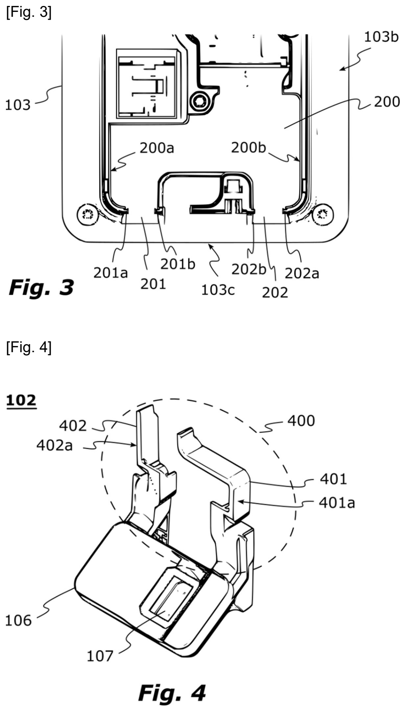

En référence aux **Fig. 2** & **Fig. 3****,** un logement **200,** telle qu'une cavité de forme sensiblement rectangulaire, est aménagée sur une face arrière **103b** du boitier **103** du terminal modulaire **101.** Le logement **200** peut être intégré au boitier **103,** formant une seule pièce avec ledit boitier **103,** ou être une pièce rapportée sur la face arrière **103b** du boitier **103,** telle qu'une pièce formant une cavité lorsqu'elle fixée sur la face arrière **103b** du boitier **103** à l'aide, par exemple, de clips ou de vis.

Le logement **200** comprend une paroi interne **200a, 200b.** Il comprend également au moins une ouverture **201** débouchant vers la face **103c** du boitier **103** à laquelle est juxtaposée le module biométrique **102.** Au moins un bord latéral **201a** de l'ouverture **201** forme un bord saillant. Ce bord saillant **201a** est sensiblement perpendiculaire au plan de la face principale arrière **103b** du boitier **103.**

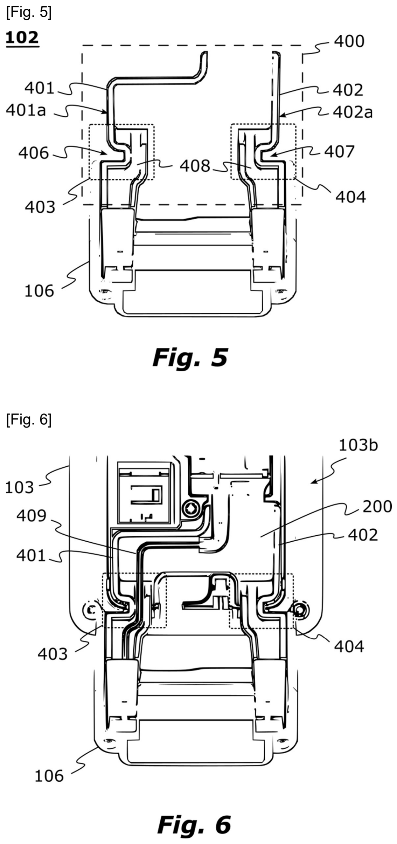

En référence aux **Fig. 4** & **Fig. 5****,** le module biométrique **102** comprend une patte **400** de maintien, mécaniquement solidaire dudit module biométrique **102.** Dans l'exemple, la patte **400** de maintien est un profilé intégré au boitier **106** du module biométrique **102.** Le profilé est, de préférence, en polymère thermoplastique. Dans le mode de réalisation illustré sur les figures, la patte **400** de maintien est formée de deux branches **401, 402** qui sont dans le prolongement des extrémités droite et gauche du boitier **106** du module biométrique **102.** Chacune des deux branches **401, 402** comprend une surface latérale externe **401a, 402a.**

La patte **400** de maintien peut être intégrée au boitier **106** du module biométrique 102, formant une seule pièce avec ledit boitier **106,** ou être une pièce rapportée sur le boitier **106,** telle qu'une patte **400** fixée sur la partie supérieure du boitier **106** à l'aide, par exemple, de clips ou de vis.

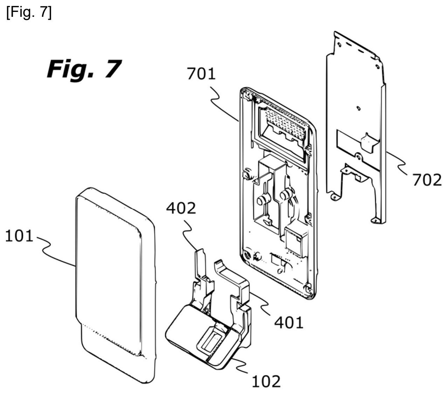

En référence aux **Fig. 6** & **Fig. 7****,** conformément au premier aspect de l'invention, le logement **200** aménagé sur une face arrière **103a** du terminal modulaire **101** et la patte **400** de maintien, mécaniquement solidaire du module biométrique **102,** forment un système de fixation amovible. Les dimensions de la patte **400** de maintien sont adaptées à la taille de logement **200** aménagé sur une face arrière **103a** du terminal modulaire **101** pour permettre son insertion dans ledit logement **200.** Dès lors que la patte **400** de maintien est insérée dans le logement **200** du boitier **103** du terminal modulaire **101,** elle maintient un contact mécanique surfacique avec au moins une portion de la paroi interne **200a, 200b** du logement **200** et enveloppe le bord saillant latéral **201a** de l'ouverture 201 ouverture.

Selon des modes préférés de réalisation, illustrés sur les **Fig. 2** & **Fig. 3****,** le logement **200** comprend deux ouvertures **201, 202.** Ces ouvertures **201, 202** sont formées de part et d'autre du boitier **103,** à proximité de ses extrémités latérales (droite et gauche). La deuxième ouverture **202** débouche également vers la face **103c** du boitier **103** à laquelle est juxtaposée le module biométrique **102.** Au moins un bord latéral **202a** de la deuxième ouverture **202** forme un bord saillant.

En référence à la **Fig. 6** & **Fig. 7****,** la patte **400** de maintien du module biométrique **102,** lorsqu'elle est insérée dans le logement **200,** enveloppe en outre le bord saillant latéral **202a** de la deuxième ouverture **202.** De préférence, la première branche **401** de la patte **400,** lorsqu'elle est insérée dans le logement **200,** maintient un contact mécanique surfacique entre une portion de sa surface externe **401a** et au moins une portion de la paroi interne **200a** du logement **200** et enveloppe le bord saillant latéral **201a** de la première ouverture **200.** La deuxième branche **402** de la patte **400** de maintien, lorsqu'elle est insérée dans le logement **200,** maintient un contact mécanique surfacique entre une portion de sa surface externe **402a** et au moins une portion de la paroi interne **200b** du logement **200** et enveloppe le bord saillant latéral **202a** de la deuxième ouverture **202.**

Pour permettre leur passage dans les ouvertures **201, 202,** chacune une des deux branches **401, 402** comprend généralement une portion **403, 404** dont la section présente des dimensions géométriques, notamment en largeur et en profondeur, adaptées à celles des sections internes des deux ouvertures **201, 202** du logement **200.**

De manière générale, le contact mécanique surfacique entre les surfaces externes **401a, 402a** des branches **401, 402** de la patte **400** de maintien et les parois internes **200a, 200b** du logement **200** est étendu, est d'autant plus ferme qu'il étendu entre lesdites surfaces externes **401a, 402a** et lesdites parois internes **200a, 200b.** Avantageusement, la taille des branches **401, 402** de la patte **400** est adaptée afin que les surfaces externes **401a, 402a** sont en contact au moins les des deux tiers voire des trois-quarts de la surface des parois internes **200a, 200b.**

Selon des modes préférés de réalisation, en référence aux **Fig. 4****,** **Fig. 5** & **Fig. 6****,** la patte **400** de maintien enveloppe le bord saillant latéral **201a** de la première ouverture **201** et/ou le bord saillant latéral **202a** de la deuxième ouverture **202** grâce à un coude **405, 406.** Le coude peut par exemple se présenter sous la forme d'un « U » dont l'ouverture est inclinée à la verticale. Lorsque la patte **400** de maintien est insérée dans le logement, les portions **403, 404** des deux branches **401, 402** s'insèrent dans les ouvertures **201, 202** et les coudes **405, 406** enveloppent respectivement les bords saillants latéraux **201a, 202a** des deux ouvertures **201, 202.**

Conformément à un mode de réalisation (non illustré), le logement **200** peut comprendre une unique ouverture **201,** par exemple située sensiblement au centre du logement **200.** Néanmoins, ce mode de réalisation apporte un maintien mécanique mois robuste par rapport à celui dans lequel le logement **200** est comprend deux ouvertures **201, 202.** Dès lors que le logement **200** du boitier **103** du terminal modulaire **101** comprend une unique ouverture **201,** notamment située sensiblement au centre du logement **200,** le patte **400** de maintien peut comprendre un profilé formé de deux branches ayant une portion commune située au centre du boitier **106** du module biométrique **102.** Cette potion commune s'insère alors dans l'unique ouverture **201** du logement **200** et les deux branches **401, 402** s'étendent alors le long des parois internes **200a, 200b** du logement **200.** Les dimensions géométriques, notamment en largeur et en profondeur, de la section de ladite portion commune sont donc adaptées à celles de l'unique ouverture **201** du logement **200.** La portion commune peut comprendre les deux coudes 403, 404, chaque coude étant situés de part et d'autre de la section transverse de la portion commune. Chaque coude permet respectivement d'envelopper les bords saillants latéraux **201a, 201b** de part et d'autre de l'ouverture **201.**

Selon certains modes préférés de réalisation, la patte **400** de maintien est composée d'une matière élastique, de préférence en polymère thermoplastique. Les dimensions de la patte **400,** en particulier l'écartement des deux branches **401, 402,** sont plus grandes que le logement **200** du boitier **103** du terminal **101,** de sorte que, lorsqu'elle est insérée dans le logement **200,** elle exerce une contrainte mécanique de compression sur la paroi interne **200a, 200b** du logement **200.** Cette contrainte mécanique de compression permet d'affermir le maintien du module biométrique **102** au terminal **101.**

L'insertion de la patte **400** de maintien du module biométrique **102** dans le logement **200** du terminal **101** est réalisée de toute manière adaptée. De préférence, la patte **400** de maintien est insérée dans le logement **200** du terminal **101** par emboitement. A cet effet, en référence à la **Fig. 7****,** le logement **200,** y compris les deux ouvertures **201, 202,** peut comprendre une face ouverte vers l'extérieure de la face principale arrière **103b** du boitier **103** du terminal **101** modulaire. La patte **400** de maintien peut alors être présentée parallèlement à cette face ouverte pour y être inséré en l'emboitant dans une direction perpendiculaire à ladite face ouverte.

En référence aux **Fig. 4****,** **Fig. 5** & **Fig. 6****,** la patte **400** de maintien, notamment l'une ou l'autre des deux branches **401, 402** ou les deux, comprend une rigole **408** pour le passage d'un câble **409** de connexion entre le terminal **101** modulaire et le module biométrique **102.** La rigole peut être aménagée dans la portion des branches **401, 402** qui passent au travers des ouvertures **201, 202.**

Selon certains modes de réalisation, le système de fixation comprend en outre un ruban (non représenté), de préférence en matière plastique ou en carton, encerclant et chevauchant la jonction entre terminal **101** modulaire et le module biométrique **102.** La fonction de ce ruban est de maintenir temporairement l'ensemble du terminal **101** modulaire et du module biométrique **102** afin de prévenir la désolidarisation intempestive du module biométrique **102** lors de leur manipulation par un opérateur, par exemple lors de leur installation et/ou de leur câblage. Le ruban est destiné à être retiré juste avant l'installation et la fixation définitive de l'ensemble du terminal **101** modulaire et du module biométrique **102.**

Selon certains modes de réalisation, en référence à la **Fig. 7****,** le système de fixation comprend, en outre, une plaque **701** de fermeture, de préférence en plastique, ladite plaque **701** de fermeture étant adaptée à être fixée au logement **200** du terminal **101** modulaire de manière à fermer ledit logement **200** et à bloquer la patte **400** de maintien du module **102** biométrique dans ledit logement **200.** La fixation de la plaque **701** de fermeture sur la face arrière **103a** du boitier **103** du terminal **101** modulaire est de tout type adapté. Elle peut notamment être réalisée à l'aide de vis.

Selon certains modes de réalisation, le système de fixation comprend, en outre, un support **702** de fixation murale, par exemple sous la forme d'une plaque métallique, pour l'agencement de l'ensemble du terminal **101** modulaire et du module **102** biométrique sur une paroi murale. Le support **702** de fixation murale peut, par exemple, être fixé sur la plaque **701** de fermeture par tout moyen adapté (vis, clips..). L'ajout d'un support **702** de fixation murale sous la forme d'une plaque métallique permet de procurer une rigidité lorsque l'ensemble du terminal **101** modulaire et du module **102** biométrique est fixé contre une paroi.

### Références

WO 2014/160448 A1 [SOLOINSIGHT INC [US]] 02.10.2014.
DE 202022104750 U1 [PRADOTEC SALES & SERVICES SDN BHD [MY]] 30.06.2022.
WO 2015/104486 A1 [SYSTEMES ET TECHNOLOGIES IDENTIFICATION STID [FR]] 16.07.2015.

## Revendications

1. Système de fixation amovible d'un module biométrique (**102**) sur un terminal modulaire (**101**) d'identification biométrique, le système comprend :
- Un logement (**200**) aménagé sur une face arrière (**103a**) du boitier (**103**) du terminal modulaire (**101**), ledit logement (**200**) comprend une ouverture (**201**) munie d'un bord saillant latéral (**201a**) ;
- Une patte (**400**) de maintien, mécaniquement solidaire du module biométrique (**102**), ladite patte (**400**) de maintien, lorsqu'elle est insérée dans le logement (**200**) du boitier (**103**), maintient un contact mécanique surfacique avec au moins une portion de la paroi interne (**200a, 200b**) dudit logement (**200**) et enveloppe le bord saillant latéral (**201a**) de l'ouverture (**201**).

2. Système de fixation amovible selon la revendication 1, tel que le logement (**200**) comprend une deuxième ouverture (**202** munie d'un bord saillant latéral (**202a**), et la patte (**400**) de maintien, lorsqu'elle est insérée dans le logement (**200**), enveloppe le bord saillant latéral (**202a**) de la deuxième ouverture (**202**).

3. Système de fixation amovible selon la revendication 2, tel que la patte (**400**) de maintien comprend une première branche (**401**) qui, lorsqu'elle est insérée dans le logement (**200**), maintient un contact mécanique surfacique entre une portion de sa surface externe (**401a**) et au moins une portion de la paroi interne (**200a**) du logement (**200**) et enveloppe le bord saillant latéral (**201a**) de la première ouverture (**200**), et une deuxième branche (**402**) qui, lorsqu'elle est insérée dans le logement (**200**), maintient un contact mécanique surfacique entre une portion de sa surface externe **(402a)** et au moins une portion de la paroi interne (**200b**) du logement (**200**) et enveloppe le bord saillant latéral (202a) de la deuxième ouverture (**202**).

4. Système de fixation amovible selon l'une quelconque des revendications 1 à 3, tel que la patte (**400**) de maintien enveloppe le bord saillant latéral (**201a**) de la première ouverture (**201**) et/ou le bord saillant latéral (**202a**) de la deuxième ouverture (**202**) grâce à un coude (**405, 406**).

5. Système de fixation amovible selon l'une quelconque des revendications 1 à 4, tel que la patte (**400**) de maintien est composée d'une matière élastique, de préférence en polymère thermoplastique, et les dimensions de la patte (**400**), en particulier l'écartement des deux branches (**401, 402**), sont plus grandes que le logement (**200**) du boitier (**103**) du terminal (**101**), de sorte que, lorsqu'elle est insérée dans le logement (**200**), elle exerce une contrainte mécanique de compression sur la paroi interne (**200a, 200b**) du logement (**200**).

6. Système de fixation amovible selon l'une quelconque des revendications 1 à 5, tel que la patte (**400**) de maintien est insérée dans le logement (**200**) du terminal (**101**) par emboitement.

7. Système de fixation amovible selon l'une quelconque des revendications 1 à 6, tel que la patte (**400**) de maintien, notamment l'une ou l'autre des deux branches (**401, 402**) ou les deux, comprend une rigole (**408**) pour le passage d'un câble (**409**) de connexion entre le terminal (**101**) modulaire et le module biométrique (**102**).

8. Système de fixation amovible selon l'une quelconque des revendications 1 à 7, tel qu'il comprend en outre un ruban, de préférence en matière plastique ou en carton, encerclant et chevauchant la jonction entre terminal (**101**) modulaire et le module biométrique (**102**).

9. Système de fixation amovible selon l'une quelconque des revendications 1 à 7, tel qu'il comprend, en outre, une plaque (**701**) de fermeture, de préférence en plastique, ladite plaque (**701**) de fermeture étant adaptée à être fixée au logement (**200**) du terminal (**101**) modulaire de manière à fermer ledit logement (**200**) et à bloquer la patte (**400**) de maintien du module (**102**) biométrique dans ledit logement (**200**).

10. Système de fixation amovible selon l'une quelconque des revendications 1 à 9, tel qu'il comprend en outre un support (**702**) de fixation murale, de préférence sous la forme d'une plaque métallique.

11. Terminal modulaire (**101**) comprenant un logement (**200**) adapté pour un système de fixation amovible selon l'une quelconque des revendications 1 à 10.

12. Terminal modulaire (**101**) selon la revendication 11, tel que le logement (**200**) est intégré au boitier (**103**) du terminal modulaire (**101**) ou est une pièce rapportée sur la face arrière (**103b**) dudit boitier (**103**).

13. Terminal modulaire (**101**) selon l'un quelconque des revendications 11 à 12, tel qu'il comprend un dispositif de reconnaissance faciale.

14. Module biométrique (**102**) comprenant une patte (**400**) de maintien adaptée pour un système de fixation amovible selon l'une quelconque des revendications 1 à 10.

15. Module biométrique (**102**) selon la revendication 14, tel que la patte (**400**) de maintien peut être intégrée au boitier (**106**) du module biométrique (**102**), formant une seule pièce avec ledit boitier (**106**), ou être une pièce rapportée sur le boitier (**106**).
